(19) Europäisches Patentamt
European Patent Office
Office européen des brevets

(11) **EP 4 174 792 A1**

(12) **EUROPEAN PATENT APPLICATION**

(43) Date of publication:
**03.05.2023  Bulletin 2023/18**

(21) Application number: **21306526.1**

(22) Date of filing: **29.10.2021**

(51) International Patent Classification (IPC):
***G06V 10/75*** (2022.01)   ***G06V 10/82*** (2022.01)
***G06V 20/10*** (2022.01)

(52) Cooperative Patent Classification (CPC):
**G06V 20/176; G06V 10/75; G06V 10/759;**
**G06V 10/82;** G06V 2201/12

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Geosat**
**33610 Canejan (FR)**

(72) Inventors:
• **BIASUTTI, Pierre**
  **75 Paris (FR)**
• **FERRERO, Cédrik**
  **33 Pessac (FR)**

(74) Representative: **Plasseraud IP**
  **66, rue de la Chaussée d'Antin**
  **75440 Paris Cedex 09 (FR)**

(54) **METHOD FOR SCENE UNDERSTANDING AND SEMANTIC ANALYSIS OF OBJECTS**

(57)    Method for scene understanding and semantic analysis of such a scene comprising a neural network and comprising starting from a 3D point cloud (105) a general pipeline (100a, 100b) comprising, based on the 3D coordinates of the points of the 3D point cloud, the steps of:

a) generation of a global 3D voxel occupancy grid structure of resolution n of the 3D point cloud (110);

b) Voxelization of the 3D point cloud (115);

c) generation of non-overlapping cubic volumes (40) of resolution $N=2^K.n$ in said global occupancy grid structure (120);

d) iterative analysis (130) of said non-overlapping cubic volumes, each containing a plurality of voxels (20), comprising;

i) for each of said non-overlapping cubic volumes, generating (131) a local 3D contextual occupancy grid structure (10) to prepare for segmentation of said each of said non-overlapping cubic volumes;

ii) retrieving voxels in said each of said non-overlapping cubic volumes and said local 3D contextual occupancy grid (132);

iii) segmenting said non-overlapping cubic volumes using said local 3D contextual occupancy grid and a deep-learning model for semantic labelling of voxels within each of said non-overlapping cubic volumes (133);

iv) semantic labelling points (140) of the point cloud falling within the voxels labelled during the iterative analysis, and;

e) refining segmentation between objects at ground level and ground (150, 160, 170, 180).

**FIG. 1A**

## Description

### Field of the invention

The present disclosure concerns the semantic analysis of scenes obtained through a point cloud generation process and provides a novel method for scene understanding and semantic analysis of objects in such scenes using a novel deep learning model.

### Background

The technology of scanning laser measurements known as LiDAR (Light Detection and Ranging) has achieved great interest due to its potential application in autonomous navigation of vehicles, digitized building and infrastructure modeling (BIM), 3D modeling of objects, film and video games. However, the 3D point cloud obtained by LiDAR scanning is inherently unstructured and difficult to visualize, making it a medium challenging to manipulate and analyze. A first sorting of the points of the point cloud by performing a classification of the points, also known as semantic segmentation, enables further processing of the point cloud more feasible. The semantic segmentation clusters points of the point cloud into logical clusters or groups of points by attributing a semantic identification of the groups of points thereby allowing a semantic understanding of the 3D scene contained in the point cloud.

Semantic segmentation of a 3D point cloud is traditionally performed by a human operator on special software, often expensive professional software. This work is fastidious and time-consuming. Borrowing from advancements in image processing and the implementation of deep-learning techniques for understanding 2D images, recent work with deep-learning network architectures and convolutional neural networks designed or adapted for 3D point clouds such as described in Maturana, D. and S. Scherer, 2015 "VoxNet: A 3D Convolutional Neural Network for Real-Time Object Recognition", 2015 IEEE/RSJ International Conference on Intelligent Robots and Systems (IROS), have demonstrated promising results in segmentation. However, most use cases of the 3D point cloud networks are oriented towards identifying objects and less for scene understanding. This publication presents neural networks capable of consuming 3D point clouds directly for understanding interior scenes. The document Qi, C.R., Su, H., Mo, K., Guibas, L.J., 2017 "PointNet: Deep Learning on Point Sets for 3D Classification and Segmentation", Conference on Computer Vision and Pattern Recognition extends feature map learning by convolutional layers through the addition of multi-layer perceptron (MLPs) to take feature map non-linearity into account.

Current deep learning models based on convolutional neural networks that directly consume 3D point clouds require some method to organize the inherently unorganized point cloud data. The use of voxels permits the 3D organization of the points and provides a means to make more efficient queries of relative spatial placement of the points. A voxel is the term generally applied to a 3D regularly gridded space. It is the 3D analog to the pixel in raster and/or photographic images such as described in Kaufman et al., 1993; "Volume Graphics" IEEE Computer, Vol. 26, No. 7 July 1993, pp. 51-64 DOI: 10.1109/MC.1993.274942. The use of this voxelization technique is seen in video games such as known under the trademark "Minecraft" or in 3D medical imaging.

While the above-mentioned models were developed for generalized point cloud segmentation, these models also employ 3D convolutional architecture on entire objects or interior scenes. The desired use-case is, ultimately, complex exterior scenes. Classification methods are also discussed in Roynard et al. "Classification of Point Cloud Scenes with Multiscale Voxel Deep Network", 10 Apr 2018 arXiv:1804.03583v1 and Yang et al. "HDNET: Exploiting HD Maps for 3D Object Detection" 2nd Conference on Robot Learning (CoRL 2018) arXiv:1804.03583. The influences of the works of Roynard et al. and Yang et al. are pertinent relative to the

    a. consumption of entire point clouds;
    b. use of binary occupancy grids and voxel structures;
    c. attempts to integrate contextual, multiscale information.

In particular Roynard et al. addresses feature maps generated from multiple voxel dimensions and concatenation of multi-scale information.

The model developed by Roynard et al. in "Classification of Point Cloud Scenes with Multiscale Voxel Deep Network" cited above includes a parallelized processing of the point cloud at different scales. The authors acknowledge that the model performance is sensitive to the choice of the three voxel dimensions. The output feature maps of the three parallel networks are then concatenated to perform the final step of the classification task. The size of the input data is 32x32x32 in x, y, z. The size capacity of the input data is another problem discussed in subsequent sections as it impacts the ability of the model to learn more quickly which will impact the time to maturity for the model.

The model developed by Yang et al. cited hereabove takes advantage of not only the 2.5D object geometries (x, y, elevation), but intensity fields as well. The model adopts a fully convolutional network for single-stage dense object detection which is composed of two parts: a backbone network that extracts multi-scale features and a header network that outputs pixel-wise dense detection estimates. The backbone network provided creates the feature maps containing the multi-scale information which are eventually concatenated in the header network.

The principal challenges of supervised deep-learning with 3D point clouds are:

i. availability and volume of training datasets, a perennial problem for supervised learning methods;

ii. the limitation of additional information other than the relative position of the points, e.g., intensity and color may or may not be available;

iii. the sensitivity of learned features to the LiDAR sensor and system used due to scan patterns and to the point cloud density;

iv. incorporating relative and global context in the learning process given the unstructured nature of the point cloud, and lastly,

v. combining model performance with optimal execution times for massive processing.

## Summary of the invention

In view of these problems and prior art, the present disclosure concerns a novel method to generalize the 3D point cloud semantic segmentation and an equally novel convolutional neural network architecture designed to progressively carry the context in order for a system such as autonomous vehicle driving system to understand a scene and obtain a semantic analysis of such a scene.

The present disclosure proposes to build a pipeline for treating a point cloud, such pipeline comprising generating a voxel occupancy grid structure, an iterative analysis of individual voxel volumes, generating a local contextual occupancy grid structure to prepare for segmentation, segmentation of volume's voxels, semantic labeling points of the point cloud falling within the volume structure, and a refined semantic ground segmentation.

The proposed method targets the semantic segmentation of a 3D point cloud made of 3D points. It focuses mostly on real 3D point clouds acquired via LiDAR sensors in urban scenarios, but it is not limited to such data. Although 3D points can have many different attributes/modalities, the proposed method only makes use of the 3D coordinates of each point ($x, y$ and $z$), thus any additional modality (such as colors, scan angles, etc.) is ignored which makes the method more versatile and useable for various applications.

More precisely, the present disclosure proposes a method for scene understanding and semantic analysis of such a scene comprising a neural network and comprising, starting from a 3D point cloud, a general pipeline comprising, based on the 3D coordinates of the points of the 3D point cloud, the steps of:

a. generation of a global 3D voxel occupancy grid structure of resolution n of the 3D point cloud, n being the length of a voxel edge;

b. voxelization of the 3D point cloud;

c. generation of non-overlapping cubic volumes of resolution $N=2^K.n$ in said global occupancy grid structure;

d. iterative analysis of said non-overlapping cubic volumes, each containing a plurality of voxels, comprising;

i. for each of said non-overlapping cubic volumes, generating a local 3D contextual occupancy grid structure to prepare for segmentation of said each of said non-overlapping cubic volumes;

ii. retrieving voxels in said each of said non-overlapping cubic volumes and said local 3D contextual occupancy grid;

iii. segmenting said non-overlapping cubic volumes using said local 3D contextual occupancy grid and a deep-learning model for semantic labelling of voxels within each of said non-overlapping cubic volumes;

e. semantic labelling points of the point cloud falling within the voxels labelled during the iterative analysis, and;

f. refining segmentation between objects at ground level and ground.

The deep learning model used is preferably a convolutional neural network

The resolution n is the length of a voxel edge.

While the disclosed model has been developed for scanning measurements from terrestrial mobile-mapping systems (MMS or TLS) or a.k.a. mobile LiDAR scanning systems (MLS), its fundamental theory would be applicable for other types of point clouds generated from remotely sensed or airborne LiDAR.

Important features of the present disclosure are:

1. LiDAR Sensor-insensitivity,

2. Robust processing of sparse and/or spatially variant point cloud density,

3. Efficient incorporation of contextual information using innovative volume consumption,
4. Novel single-stage network architecture for semantic segmentation.

In realization modes which may be combined or alternate:

said generation of a local 3D occupancy grid structure may comprise generating a binary voxel occupancy grid of resolution n from the input 3D point cloud such that every 3D point $p$ of coordinates $(x,y,z)$ is associated with voxel $v$ of coordinates $(x_v, y_v, z_v)$ if:

$$x_v = \left\lfloor \frac{x}{n} \right\rfloor \ and \ y_v = \left\lfloor \frac{y}{n} \right\rfloor \ and \ z_v = \left\lfloor \frac{z}{n} \right\rfloor$$

where the value of each voxel is defined as follows:

    a. 1 if at least one 3D point of the 3D point cloud falls into it,
    b. 0 otherwise.

Preferably, the resolution n defines the size of an edge of said voxels and is chosen according to the scale of the smallest type of object to segment.

In example, for an urban scenario, n is typically chosen in tens of centimeters.

The iterative analysis of individual non-overlapping cubic volumes may comprise splitting said global 3D voxel occupancy grid structure into said non-overlapping cubic volumes of resolution $N^3$ where, N is a multiple of n.

Said method may then comprise processing the totality of the input 3D point cloud by iterations over each of said non-overlapping cubic volumes.

$N$ may be the result of n multiplied by a power of 2 according to $L = \frac{N}{n} = 2^k$ , $k \in \mathbb{N}$ , so that $v = (x_v, y_v, z_v)$ $\in V$ of coordinates $(x_V, y_V, z_V)$ , where V is a volume comprising said voxel $v$ if:

$$x_V = \left\lfloor \frac{x_v}{N} \right\rfloor \ and \ y_V = \left\lfloor \frac{y_v}{N} \right\rfloor \ and \ z_V = \left\lfloor \frac{z_v}{N} \right\rfloor.$$

Said generating a local 3D contextual occupancy grid may comprise:

-   selecting contextual voxels associated to a volume V of minimum vertex $(X_V, Y_V, Z_V) \in \mathbb{R}^3$ and,

-   considering a given voxel $v_i$ of minimum vertex $(X_v^i, Y_v^i, Z_v^i) \in \mathbb{R}^3$ as a contextual voxel if $v_i$ satisfies, for a given radius $r \in \mathbb{R}^+$ :

$$X_V - r \leq X_v^i < X_V + N + r,$$

$$Y_V - r \leq Y_v^i < Y_V + N + r,$$

$$Z_V - r \leq Z_v^i < Z_V + N + r$$

And

-   for each non-overlapping cubic volume, generating a 3D local contextual occupancy grid of size $H \times W \times D \in (\mathbb{R}^+)^3$ with the volume's voxels and its associated contextual voxels and where $H, W, D$ are the sizes of the local contextual occupancy grid along $x, y, z$ axis respectively, and $H \times W \times D = (2r + N)^3$ having

$$\frac{2r + N}{N} = 2^k, k \in \mathbb{N}.$$

Segmenting said non-overlapping cubic volumes may comprise segmenting each non-overlapping cubic volume using a deep-learning model trained to provide semantic labels, where the input of the model is the local contextual occupancy grid associated with a given non-overlapping cubic volume, and the output of the model is the semantic label of each voxel that belong to said given non-overlapping cubic volume.

The local 3D contextual occupancy grid being a 3D image along 3 axes: x, y and z of respective sizes H, W and D, the deep-learning model may process the local contextual occupancy grid by deriving three different 2D images, one along each axis and independently processing the three images by three "Dimension-As-Depth" blocks in which successive 2D convolution and 2D max pooling layers are applied until the output has the shape/dimension of said given non-overlapping cubic volume and wherein a fusion of the three outputs is done using a fully connected layer and a softmax layer such that the output of the model has the dimension of said given non-overlapping cubic volume, and each voxel is associated with a semantic label among selected classes.

For an urban classification method said selected classes preceded by their classification codes comprise:

a. Unclassified
b. Ground
c. Building
d. High vertical
e. Low vertical
f. Furniture
g. Pedestrian
h. Vehicle
i. Vegetation.

The method may also comprise associating each voxel with a semantic label after iterative processing of all the volumes and projecting back said labels on the 3D points by associating each voxel's label to the points that falls into it.

In order to refine the ground detection, the method may comprise processing voxels that are at the boundary of an object and the ground such that the boundary is refined up to a sub-voxel scale, wherein for each voxel labelled "ground" above which, relative to z axis, is a voxel with a different label, a local ground plane is fitted to the surrounding "ground" voxels and wherein said local plane is processed to enhance determination of the boundary between the ground assumed planar and the above objects such processing including assigning 3D points of the voxel that are close from the plane the label "ground", otherwise, assigning the label of the above voxel to such 3D points.

The present disclosure also concerns a 3D map comprising a classification of objects made according to any one of the previous features.

The present disclosure further concerns a guiding device of a vehicle comprising such a 3D map.

The present disclosure also concerns a computer program comprising instructions configured for executing the disclosed process and a non-transitory recording support readable by a computer system on which the computer program is recorded.

### Brief description of the drawings

A detailed description of exemplary embodiments of the invention will be discussed hereunder in reference to the attached drawings where:

- Figure 1A: provides a first part of a flow chart of steps of the disclosure;
- Figure 1B: provides a second part of the flow chart of steps of the disclosure
- Figure 2: shows an example of scene representation with volumes and voxels;
- Figure 3: is a schematical view of an architecture of deep learning model of the present disclosure;
- Figure 4: is a detail of a part of the model of figure 3;
- Figures 5A, 5B, 5C: illustrate ground refining for a 2D case.

### Detailed description of embodiments of the invention

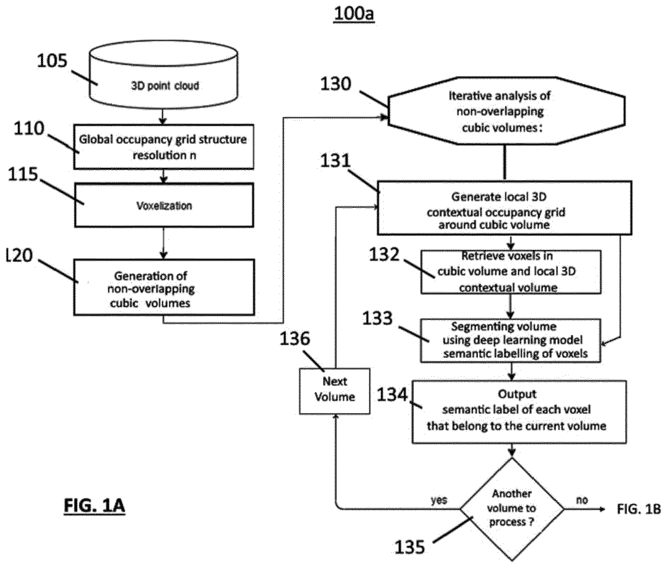

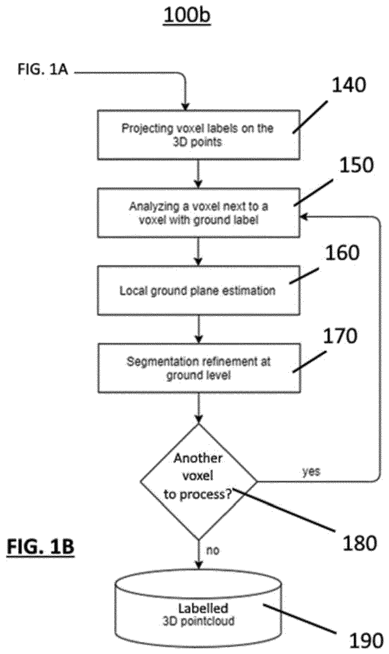

The present disclosure as depicted in figure 1A and figure 1B is based on a general pipeline comprising two parts, part 100a in figure 1A and part 100b in figure 1B, the pipeline starting from a 3D point cloud 100 which is voxelized in step 115 according to a global occupancy grid structure of resolution n defined in step 110.

The first step 110 of the pipeline is to generate the voxel occupancy grid from the point cloud. The voxel occupancy grid is defined as a 3D voxel grid of resolution n (meters), n being the length of an edge of the cubic voxels, where a voxel v has a value of 1 if it contains at least one point, 0 otherwise. The proposed approach of the present invention provides a simple occupancy grid structure in that the choice of the value attached to the voxel is strictly binary to make it independent of the point cloud density.

This simple representation of the point cloud ensures a generalization to any type of 3D point cloud as it doesn't require any additional modality (such as color) that could make the model become dependent on a specific sensor. Moreover, if the point cloud density is kept above n, the voxel occupancy grid will give a similar result for two point clouds acquired with different sensors, meaning that for a model of 10 cm voxel size, any point cloud with a density higher than 1 point every 10 cm will provide very similar binary voxel grid. Both properties, mono-modal and constrained point cloud densities, emphasize the normalization of the input of the model, while ensuring that the input remains lightweight.

An advantage of the voxel occupancy grid is that it helps overcome one of the deficiencies of 3D point clouds: the sparsity of points the further away from the LiDAR scanner. At 50 meters a sharp drop-off in point density can already be observed. The global occupancy grid structure provides a binary voxel occupancy grid of resolution n (length) which is generated from the input 3D point cloud such that every 3D point $p$ of coordinates $(x, y, z)$ is associated with voxel $v$ of coordinates $(x_v, y_v, z_v)$ if:

$$x_v = \left\lfloor \frac{x}{n} \right\rfloor \; and \; y_v = \left\lfloor \frac{y}{n} \right\rfloor \; and \; z_v = \left\lfloor \frac{z}{n} \right\rfloor$$

In this notation, the symbol $\left\lfloor \frac{x}{y} \right\rfloor$ means rounding x/y to the lower integer. As explained above, the value of each voxel is then defined as follows:

- 1 if at least one 3D point of the 3D point cloud falls into it
- 0 otherwise.

The size of the voxels must be chosen according to the scale of the smallest type of object to segment. Hence, for urban scenario, n is typically chosen in tens of centimeters.

The point cloud is then processed by volumes. To do so, the voxel occupancy grid is divided in non-overlapping cubic volumes of size $N^3$ voxels.

In step 120, the binary voxel occupancy grid is split into non-overlapping cubic volumes of resolution N. Here, N is a multiple of n such that $N = n * L$, $L = 2^k$, $k \in \mathbb{N}$. A voxel $v = (x_v, y_v, z_v)$ belongs to volume V of coordinates $(x_V, y_V, z_V)$ if:

$$x_V = \left\lfloor \frac{x_v}{N} \right\rfloor \; and \; y_V = \left\lfloor \frac{y_v}{N} \right\rfloor \; and \; z_V = \left\lfloor \frac{z_v}{N} \right\rfloor$$

E.g. for a point cloud used for understanding a point cloud acquired in an urban scene, n can be chosen equal to 25 cm and N can be chosen equal to 1 meter, the value of L being four in such case.

This way, large-scale point clouds can be processed by simply iterating through all the volumes inside the grid. Therefore, the proposed processing method offers a better trade-off between processing the whole point cloud at once, which would inevitably prevent our method from processing large point clouds, and processing one voxel at a time, which would imply iterating through a very large number of voxels, dramatically slowing down the whole pipeline.

In the example the totality of the input 3D point cloud is processed using an iterative analysis of each non-overlapping cubic volume 130.

Processing a volume involves segmenting the voxels that it contains.

In the example, in order to enhance segmentation, a local 3D contextual occupancy grid structure is used at step 131. The local 3D contextual occupancy grid structure comprises the contextual voxels around said cubic volume and is generated as follows:

When considering the volume V, which is a cube having a minimum vertex of coordinates $(X_V, Y_V, Z_V) \in \mathbb{R}^3$ in the global coordinate system which is the coordinate system of the point cloud, a given voxel $v_i$ of minimum vertex of coordinates $\left(X_v^i, Y_v^i, Z_v^i\right) \in \mathbb{R}^3$ is considered a contextual voxel if $v_i$ satisfies, for a given radius $r \in \mathbb{R}^+$ :

$$X_V - r \leq X_v^i < X_V + N + r,$$

$$Y_V - r \leq Y_v^i < Y_V + N + r,$$

$$Z_V - r \leq Z_v^i < Z_V + N + r.$$

For each volume, the 3D local contextual occupancy grid of size $H \times W \times D \in (\mathbb{R}^+)^3$ is generated with the volume's voxels and its associated contextual voxels such that $H, W, D$ are the sizes of the local contextual occupancy grid along $x, y, z$ axis respectively, and $H \times W \times D = (2r + N)^3$ having:

$$\frac{2r + N}{N} = 2^k, k \in \mathbb{N}.$$

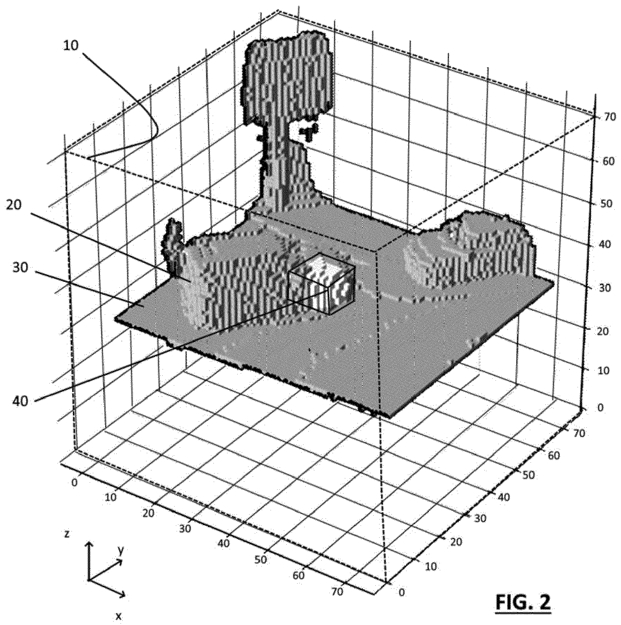

Figure 2 illustrates the various levels: voxel 20, non-overlapping cubic volume 40, local 3D contextual occupancy grid structure 10 retrieved in step 132. On such figure, x, y, z is the orthogonal basis for the coordinates of the points in the point cloud.

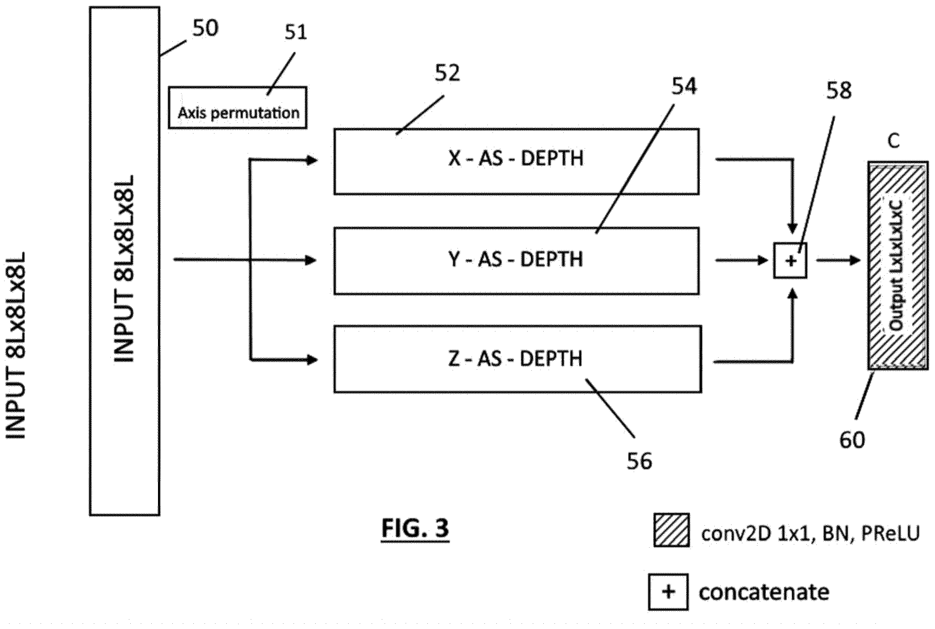

Each volume is segmented using a deep learning model summed up in figure 3. The deep-learning model is not only fed with voxels that belong to the current volume that is being processed, but also with the voxels from surrounding volumes according to the 3D local contextual occupancy grid 10. This is done to embed more contextual information when processing the voxels of a volume, while preventing border effects from appearing.

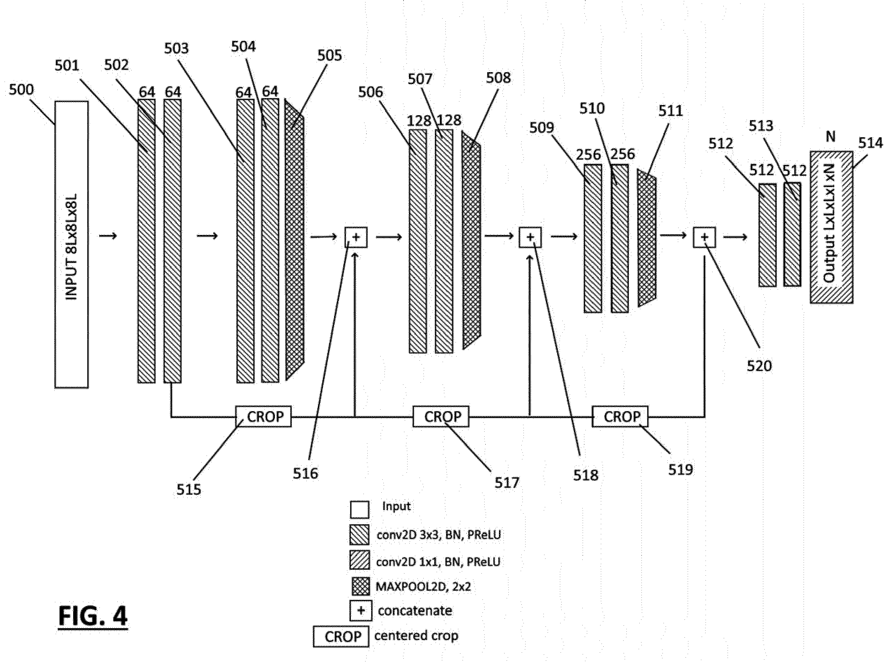

Back to figure 1A, in the next step 133, each volume is segmented using the deep-learning model illustrated in figure 3 and figure 4. The model used is a convolutional neural network. The input of the model is the local contextual occupancy grid data associated with the volume data, and the output of the classification is the semantic label of each voxel that belong to the current volume. In the provided example the semantic labels are included in a list of 9 possible labels:

1. Unclassified
2. Ground
3. Building
4. High vertical
5. Low vertical
6. Furniture
7. Pedestrian
8. Vehicle
9. Vegetation

While voxel grids are usually processed using 3D convolutions, such an operation usually leads to a big increase in the number of parameters of the model as well as a costly increase in computational time. To avoid such drawbacks, the present method relies on 2D convolutions. To do so, a 3D voxel grid is turned into a 2D image with d channels such that d equals the number of voxels of the axis chosen as the image channels.

Using 2D convolutions instead of 3D convolutions to process voxel grids has been discussed in Yang et al. cited above, however in this prior work, only the vertical axis (z) is used as the 2D image depth/channels.

In the present disclosure the local contextual occupancy grid is a 3D image of respective sizes H, W and D which is derived in three 2D images, along the three axes: x, y and z defined above, by the deep learning model or convolutional neural network. The deep learning model therefore processes the local contextual occupancy grid 50 by deriving 3 different 2D images, one along each axis or spatial dimension. From this 3D image, a 2D image along an axis "a" can be defined as any permutation of the dimensions of the 3D image in which a ends-up as the last dimension, that is "a" is the channel dimension of the 2D image. For example, a 2D image along axis x can be obtained by the two following permutations: (y, z, x) or (z, y, z). In both cases, the channel dimension of the image is along the x axis.

In terms of programming, it should be noted that only the coordinates of the non-empty voxels are stored to reduce the memory usage while the complete occupancy grids are generated in entry of the deep learning algorithm.

The three 2D images obtained through the permutations 51 of figure 3 are independently processed by three "Dimension-As-Depth" blocks 52, 54, 56 receiving as input the volume and context data.

In figures 3 and 4, L corresponds to the number of voxels contained along an axis of the volume. For example, for a volume of resolution N = 1 m, which contains voxels of a resolution of 0.25 m, L will be L = N/n = 4. In such a case, the input 50 of the model is 32 x 32 x 32 voxels, and the output 60 of the model will be 4 x 4 x 4 x C, where C is the number of classes which here is equal to nine.

The subpart blocks of the convolutional network of figure 3 are identical and comprise as shown in figure 4 several levels of computation:

A first level comprising:

- a first block of two first successive 2D convolutions 501, 502 with 64 filters and 3x3 kernels. The output of these two convolutions will now on be referred to as the raw features of the input;
- a second block of two second successive 2D convolutions 503, 504 with 64 filters and 3x3 kernels (Conv2D 3x3), in which the raw features are fed to, and a 2D max pooling layer 505 of size 2x2 and stride 2x2 (Maxpool2D 2x2) receiving the output of the second successive 2D convolutions.

Finally, a concatenation 516 of the output of the second block is done on the last dimension with the raw feature previously cropped 515 from the center such that the height and width of the crop matches the height and width of the output of the second block. The second block is then repeated twice at 506, 507, 508, 509, 510, 511 with an intermediate concatenation 518 with secondly cropped 517 raw features, increasing the number of filters of the 2D convolutions to 128 and 256. After the final concatenation 520 with thirdly cropped 519 raw features, the output is fed to two successive 2D final convolutions 512, 513 having 512 filters and 3x3 kernels, and to a final 2D convolution 514 with 9 filters and $1\times1$ kernels (Conv2D $1\times1$).

The output of the three "Dimension-As-Depth" blocks are then concatenated along the last dimension all together and fed to an ultimate 3D convolution 514 having 9 filters and $1\times1\times1$ kernels and having a softmax layer for numerical stability.

After every convolution in the model (2D and 3D), parametric rectified linear unit (PReLU) and batch-normalization (BN) layers are applied.

After having been processed by the model, the label of each voxel can be determined by taking the maximum values of each voxel along the last dimension of the output of the model.

The model is trained using a ground truth point cloud of over 30 million points, resulting in more than 200 000 volumes. For each point, the label is known and belongs to the list hereabove. When training, the output of the model is compared to the classes of the same volume in the ground truth using the so-called Focal-Loss introduced in Lin, T. Y., Goyal, P., Girshick, R., He, K., & Dollar, P. (2017) "Focal loss for dense object detection" In Proceedings of the IEEE international conference on computer vision (pp. 2980-2988).

After processing all the volumes, each voxel is associated with a semantic label. These labels are then projected back on the 3D points in step 140 of figure 1B by associating each voxel's label to the points that fall into it.

Performances of the model are detailed in the following table 1. The performance is measured with the Intersection-over-Union metric, which is a common measure for semantic segmentation tasks in deep-learning. Note that the processing time of the point cloud used for the numerical analysis is about 18s with a commercial GPU named GeForce® RTX 2080 of the company NVIDIA®.

Table 1 — Model score metrics

| Label | Score (IoU) | Validation samples | Label details |
|---|---|---|---|
| Unclassified (0) | 0.182 | 919 voxels | - |
| Ground (1) | 0.985 | 21183 voxels | Ground, road surface |
| Building (2) | 0.922 | 47405 voxels | Buildings, walls |
| High vertical (3) | 0.862 | 652 voxels | Traffic signs, traffic lights, road lights |
| Low vertical (4) | 0.414 | 140 voxels | Fences, bollards |
| Furniture (5) | 0.812 | 573 voxels | Bench, bin, bike parking structure |
| Pedestrian (6) | 0.577 | 312 voxels | Pedestrian |

(continued)

| Label | Score (IoU) | Validation samples | Label details |
|---|---|---|---|
| Vehicle (7) | 0.955 | 3787 voxels | Cars, bikes, motorbikes, trucks, buses |
| Vegetation (8) | 0.972 | 47691 voxels | Trees, plants, bushes |

Average score 0.747 total 122010 voxels.

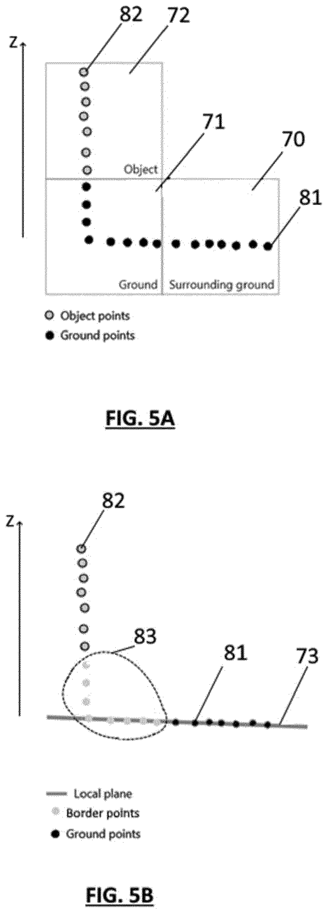

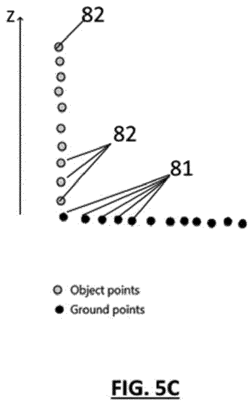

A further process illustrated in figure 1B consists in refining ground segmentation by refining detection of voxels that are at the boundary of an object and the ground as detected in step 150. Such voxels are processed in order that the boundary is refined up to a sub-voxel scale, as illustrated in Figures 5A, 5B, 5C for a 2D case. For each voxel labelled "ground" 71 above which, relative to z axis, is a voxel 72 with a different label as in figure 5A, a local ground plane 73 is fitted to the surrounding "ground" voxels 70 as in figure 5B. This local plane is then used to better determine the boundary between the ground assumed locally planar and the above objects with respect to the points 83 which are to be reconsidered. 3D points 81 of the voxel 71 that are close from the plane are labelled "ground", otherwise, they take the same label as the points 82 of the above voxel as in figure 5C. This process takes places at steps 160 local ground plane estimation and 170 segmentation refinement at ground level of figure 1B and is repeated at step 180 for every ground voxel under an object voxel.

The described example illustrates the invention without limiting the coverage of the claims and in example, the size of the voxels, number of voxels in a volume and size of the contextual grid may be changed according to the size of objects to be segmented.

**Claims**

1. Method for scene understanding and semantic analysis of such a scene comprising a neural network and comprising starting from a 3D point cloud (105) a general pipeline (100a, 100b) comprising, based on the 3D coordinates of the points of the 3D point cloud, the steps of:

   a. generation of a global 3D voxel occupancy grid structure of resolution n of the 3D point cloud (110);
   b. Voxelization of the 3D point cloud (115);
   c. generation of non-overlapping cubic volumes (40) of resolution $N=2^K.n$ in said global occupancy grid structure (120);
   d. iterative analysis (130) of said non-overlapping cubic volumes, each containing a plurality of voxels (20), comprising;

   i) for each of said non-overlapping cubic volumes, generating (131) a local 3D contextual occupancy grid structure (10) to prepare for segmentation of said each of said non-overlapping cubic volumes;
   ii) retrieving voxels in said each of said non-overlapping cubic volumes and said local 3D contextual occupancy grid (132);
   iii) segmenting said non-overlapping cubic volumes using said local 3D contextual occupancy grid and a deep-learning model for semantic labelling of voxels within each of said non-overlapping cubic volumes (133);

   e. semantic labelling points (140) of the point cloud falling within the voxels labelled during the iterative analysis, and;
   f. refining segmentation between objects at ground level and ground (150, 160, 170, 180).

2. Method according to claim 1, wherein said generation of a local 3D occupancy grid structure comprises generating a binary voxel occupancy grid of resolution n from the input 3D point cloud such that every 3D point $p$ of coordinates $(x, y, z)$ is associated with voxel $v$ of coordinates $(x_v, y_v, z_v)$ if:

$$x_v = \left\lfloor \frac{x}{n} \right\rfloor \; and \; y_v = \left\lfloor \frac{y}{n} \right\rfloor \; and \; z_v = \left\lfloor \frac{z}{n} \right\rfloor$$

and wherein the value of each voxel is defined as follows:

a) 1 if at least one 3D point of the 3D point cloud falls into it,
b) 0 otherwise.

3. Method according to claim 2, wherein the resolution n defines the size of an edge of said voxels and is chosen according to the scale of the smallest type of object to segment.

4. Method according to claim 2 or 3, wherein for an urban scenario, n is typically chosen in tens of centimeters.

5. Method according to any one of claims 2 to 4, wherein said iterative analysis of individual non-overlapping cubic volumes, comprises splitting said global 3D voxel occupancy grid structure into said non-overlapping cubic volumes of resolution $N^3$ where, N is a multiple of $n$ and said method comprises processing the totality of the input 3D point cloud by iterations over each of said non-overlapping cubic volumes.

6. Method according to claim 5, where N is the result of n multiplied by a power of 2 according to $L = \dfrac{N}{n} = 2^k$, $k \in \mathbb{N}$, so that $v = (x_v, y_v, z_v) \in V$ of coordinates $(x_V, y_V, z_V)$, where V is a volume comprising said voxel $v$ if:

$$x_V = \left\lfloor \frac{x_v}{N} \right\rfloor \ and \ y_V = \left\lfloor \frac{y_v}{N} \right\rfloor \ and \ z_V = \left\lfloor \frac{z_v}{N} \right\rfloor.$$

7. Method according to claim 5 or 6, wherein said generating a local 3D contextual occupancy grid comprises:

selecting contextual voxels associated to a volume V of minimum vertex $(X_V, Y_V, Z_V) \in \mathbb{R}^3$ and considering a given voxel $v_i$ of minimum vertex $\left(X_v^i, Y_v^i, Z_v^i\right) \in \mathbb{R}^3$ as a contextual voxel if $v_i$ satisfies, for a given radius $r \in \mathbb{R}^+$:

$$X_V - r \leq X_v^i < X_V + N + r,$$

$$Y_V - r \leq Y_v^i < Y_V + N + r,$$

$$Z_V - r \leq Z_v^i < Z_V + N + r$$

And for each non-overlapping cubic volume, generating a 3D local contextual occupancy grid of size $H \times W \times D \in (\mathbb{R}^+)^3$ with the volume's voxels and its associated contextual voxels and where $H, W, D$ are the sizes of the local contextual occupancy grid along $x, y, z$ axis respectively, and $H \times W \times D = (2r + N)^3$ having

$$\frac{2r + N}{N} = 2^k, k \in \mathbb{N}.$$

8. Method according to claim 7, wherein said segmenting said non-overlapping cubic volumes comprises segmenting each non-overlapping cubic volume using a deep-learning model trained to provide semantic labels, where the input of the model is the local contextual occupancy grid associated with a given non-overlapping cubic volume, and the output of the model is the semantic label of each voxel that belong to said given non-overlapping cubic volume.

9. Method according to any one of the preceding claims, wherein the local 3D contextual occupancy grid being a 3D image along 3 axes: x, y and z of respective sizes H, W and D, the deep-learning model processes the local contextual occupancy grid by deriving three different 2D images, one along each axis and independently processing the three images by three "Dimension-As-Depth" blocks in which successive 2D convolution and 2D max pooling layers are applied until the output has the shape/dimension of said given non-overlapping cubic volume and wherein a fusion of the three outputs is done using a fully connected layer and a softmax layer such that the output of the model has the dimension of said given non-overlapping cubic volume, and each voxel is associated with a semantic label among selected classes.

**10.** Method according to claim 9, wherein, for an urban classification method said selected classes preceded by their classification codes comprise:

> 1. Unclassified
> 2. Ground
> 3. Building
> 4. High vertical
> 5. Low vertical
> 6. Furniture
> 7. Pedestrian
> 8. Vehicle
> 9. Vegetation.

**11.** Method according to claim 9 or 10, comprising associating each voxel with a semantic label after iterative processing of all the volumes and projecting back said labels on the 3D points by associating each voxel's label to the points that falls into it.

**12.** Method according to claim 11, comprising processing voxels that are at the boundary of an object and the ground such that the boundary is refined up to a sub-voxel scale, wherein for each voxel labelled "ground" above which, relative to z axis, is a voxel with a different label, a local ground plane is fitted to the surrounding "ground" voxels and wherein said local plane is processed to enhance determination of the boundary between the ground assumed planar and the above objects such processing including assigning 3D points of the voxel that are close from the plane the label "ground", otherwise, assigning the label of the above voxel to such 3D points.

**13.** 3D map comprising a classification of objects made according to any one of the preceding claims.

**14.** Guiding device of a vehicle comprising a 3D map according to claim 13.

**15.** Computer program comprising instructions configured for executing the process of any one of claims 1 to 12 when such software is executed by a computer system.

**16.** Non-transitory recording support readable by a computer system on which the computer program according to claim 15 is recorded.

## 100a

105 — 3D point cloud

110 — Global occupancy grid structure resolution n

115 — Voxelization

120 — Generation of non-overlapping cubic volumes

130 — Iterative analysis of non-overlapping cubic volumes:

131 — Generate local 3D contextual occupancy grid around cubic volume

132 — Retrieve voxels in cubic volume and local 3D contextual volume

133 — Segmenting volume using deep learning model semantic labelling of voxels

134 — Output semantic label of each voxel that belong to the current volume

135 — Another volume to process?  yes / no → FIG. 1B

136 — Next Volume

**FIG. 1A**

## 100b

FIG. 1A

**140**
Projecting voxel labels on the 3D points

**150**
Analyzing a voxel next to a voxel with ground label

**160**
Local ground plane estimation

**170**
Segmentation refinement at ground level

**180**
Another voxel to process?

yes

no

**190**
Labelled 3D pointcloud

**FIG. 1B**

**FIG. 2**

INPUT 8Lx8Lx8L

**FIG. 3**

conv2D 1x1, BN, PReLU

concatenate

EP 4 174 792 A1

INPUT 8Lx8Lx8L — 500, 501

Output LxLxL xN — 514

Legend:
- Input
- conv2D 3x3, BN, PReLU
- conv2D 1x1, BN, PReLU
- MAXPOOL2D, 2x2
- + concatenate
- CROP centered crop

**FIG. 4**

82 72

Z

71 70

81

Object

Ground Surrounding ground

○ Object points
● Ground points

**FIG. 5A**

82

Z

83 81 73

— Local plane
○ Border points
● Ground points

**FIG. 5B**

O Object points
● Ground points

**FIG. 5C**

Europäisches
Patentamt

European
Patent Office

Office européen
des brevets

# EUROPEAN SEARCH REPORT

Application Number

EP 21 30 6526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LU HONGYA ET AL: "A 3D Convolutional Neural Network for Volumetric Image Semantic Segmentation", PROCEDIA MANUFACTURING, [Online] vol. 39, 1 January 2019 (2019-01-01), pages 422-428, XP055910338, 43rd North American Manufacturing Research Conference, NAMRC 43, 8-12 June 2015, UNC Charlotte, North Carolina, United States ISSN: 2351-9789, DOI: 10.1016/j.promfg.2020.01.386 Retrieved from the Internet: URL:https://pdf.sciencedirectassets.com/30 6234/1-s2.0-S2351978920X00035/1-s2.0-S2351 978920304571/main.pdf?X-Amz-Security-Token =IQoJb3JpZ2luX2VjECEaCXVzLWVhc3QtMSJGMEQCI EgH7vRc2FASJrzDN2swZkjxMZHd7c5f7sz50MdYsh5 rAiBaJLqQj52yRcfNzG3gygU09vtnfzWzf9NM2j9ZM HkVsCqDBAi6//////////8BEAQaDDA1OTAwMzU0Njg 2NSIMeL0il> [retrieved on 2022-04-07] | 1-3,5-8, 13-16 | INV. G06V10/75 G06V10/82 G06V20/10 |
| A | * abstract * * 1. Introduction; 3.1 Methodology; 3.2 Implementation * * figure 2 * | 9,11,12 | TECHNICAL FIELDS SEARCHED (IPC) G06V |

-----

-/--

The present search report has been drawn up for all claims

| Place of search | Date of completion of the search | Examiner |
|---|---|---|
| The Hague | 9 April 2022 | Philips, Petra |

EPO FORM 1503 03.82 (P04C01)

page 1 of 2

Europäisches
Patentamt

European
Patent Office

Office européen
des brevets

**EUROPEAN SEARCH REPORT**

Application Number

EP 21 30 6526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MATURANA DANIEL ET AL: "VoxNet: A 3D Convolutional Neural Network for real-time object recognition", 2015 IEEE/RSJ INTERNATIONAL CONFERENCE ON INTELLIGENT ROBOTS AND SYSTEMS (IROS), IEEE, 28 September 2015 (2015-09-28), pages 922-928, XP032831749, DOI: 10.1109/IROS.2015.7353481 [retrieved on 2015-12-11] | 1-8, 13-16 | |
| A | * abstract * * I. Introduction; III. Approach; III.A Volumetric Occupancy Grid; IV.1 Lidar data * ----- | 9-12 | |
| X,D | XAVIER ROYNARD ET AL: "Classification of Point Cloud Scenes with Multiscale Voxel Deep Network", ARXIV.ORG, CORNELL UNIVERSITY LIBRARY, 201 OLIN LIBRARY CORNELL UNIVERSITY ITHACA, NY 14853, 10 April 2018 (2018-04-10), XP080869404, | 1-8, 13-16 | |
| A | * abstract * * sections 2.2.2; 3.1 * * figure 3 * ----- | 9-12 | TECHNICAL FIELDS SEARCHED (IPC) |

The present search report has been drawn up for all claims

| Place of search | Date of completion of the search | Examiner |
|---|---|---|
| The Hague | 9 April 2022 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATURANA, D. ; S. SCHERER.** VoxNet: A 3D Convolutional Neural Network for Real-Time Object Recognition. *2015 IEEE/RSJ International Conference on Intelligent Robots and Systems (IROS),* 2015
- **QI, C.R. ; SU, H. ; MO, K. ; GUIBAS, L.J.** PointNet: Deep Learning on Point Sets for 3D Classification and Segmentation. *Conference on Computer Vision and Pattern Recognition,* 2017
- **KAUFMAN et al.** Volume Graphics. *IEEE Computer,* July 1993, vol. 26 (7), 51-64

- **ROYNARD et al.** Classification of Point Cloud Scenes with Multiscale Voxel Deep Network. *arXiv:1804.03583v1,* 10 April 2018
- **YANG et al.** HDNET: Exploiting HD Maps for 3D Object Detection. *2nd Conference on Robot Learning,* 2018
- **ROYNARD et al.** *Classification of Point Cloud Scenes with Multiscale Voxel Deep Network*
- **LIN, T. Y. ; GOYAL, P. ; GIRSHICK, R. ; HE, K. ; DOLLAR, P.** Focal loss for dense object detection. *Proceedings of the IEEE international conference on computer vision,* 2017, 2980-2988